# FASCICULE DE BREVET EUROPEEN

(11) **EP 1 910 797 B1**
(45) Date de publication et mention de la délivrance du brevet: **27.07.2016**
(21) Numéro de dépôt: 06778853.9
(22) Date de dépôt: 11.07.2006
(51) Int. Cl.: G02B 6/38, G01M 11/00

(54) **PROCÉDÉ ET DISPOSITIF DE MESURE DE CONCENTRICITÉ D'UN C UR DE FIBRE OPTIQUE.**
VERFAHREN UND EINRICHTUNG ZUR MESSUNG DER KONZENTRIZITÄT EINES OPTISCHEN FASERKERNS
METHOD AND DEVICE FOR MEASURING OPTICAL FIBRE CORE CONCENTRICITY

(30) Priorité: 05.08.2005 FR 0508388
(43) Date de publication de la demande: 16.04.2008
(73) Titulaire: Data Pixel, 74960 Cran Gévrier (FR)
(72) Inventeur: CHEREL, Loïc, F-74000 Annecy (FR)
(74) Mandataire: Dossmann, Gérard
(86) Numéro de dépôt international: PCT/FR2006/001683
(87) Numéro de publication internationale: WO 2007/017566

(56) Documents cités:
- US-B1- 6 421 118
- US-B1- 6 710 864

## Description

L'invention concerne le domaine des dispositifs et des procédés de mesure de concentricité du coeur d'une fibre optique par rapport à un axe de référence. L'invention concerne en particulier la mesure de la concentricité du coeur de la fibre d'une fiche optique dont l'axe de référence est défini par le diamètre extérieur de la férule de la fiche optique.

Dans ce domaine, la norme IEC 61300-3-25 a décrit une méthode de détermination de la concentricité de l'axe du coeur d'une fibre optique avec le diamètre extérieur de la férule d'une fiche optique. Dans cette méthode, une source lumineuse illumine le coeur de la fibre optique à une extrémité de la fibre. La férule, dans laquelle est fixée la fibre optique, est placée dans un Vé ou un mécanisme de centrage. La face optique est positionnée face à un microscope. L'image du coeur de la fibre optique se forme sur un capteur matriciel d'une caméra vidéo. La fibre optique est pivotée autour de l'axe de la férule. Les positions successives du centre du coeur sont calculées pour en déduire la concentricité du coeur de la fibre par rapport à l'axe de pivotement.

De nombreux appareils utilisent cette méthode pour mesurer des fiches optiques polies avec une forme bombée dont un plan de tangence à l'endroit du coeur de la fibre est sensiblement perpendiculaire à l'axe de la férule de la fiche optique. Par simplification, on appelle ces fiches, des fiches polies droites. Il existe aussi des fiches dont la face optique est polie bombée dont un plan de tangence à l'endroit du coeur de la fibre est incliné avec angle de 8° par rapport à la normale à l'axe de la férule. Par simplification, on appelle ces fiches, des fiches polies obliques. Le faisceau lumineux s'échappant de la face optique polie oblique est incliné par rapport à l'axe de la férule. Comme il sera détaillé dans la description, cela introduit un décalage latéral de l'image du coeur. L'ordre de grandeur de ce décalage latéral est supérieur au décalage latéral dû aux défauts de concentricité que l'on veut mesurer, de sorte que la méthode normalisée n'est pas appliquée pour des fiches optiques polies obliques.

Cet inconvénient se présente également pour la mesure de fiches polies droites. Le sommet du polissage bombé est légèrement décalé latéralement par rapport au centre du coeur. Le défaut latéral de polissage toléré par les normes est de 50 µm. Cela provoque une tolérance d'angle de la face optique à l'endroit du coeur de l'ordre de 0,6 degré par rapport à la normale à l'axe de la férule pour un rayon du polissage bombé de 5 mm.

La mesure de concentricité est principalement nécessaire pour les fibres monomodes qui ont une ouverture numérique de 0,11, et un diamètre du coeur de la fibre d'environ 10 µm. La concentricité que l'on cherche à mesurer est un diamètre de l'ordre de 0 à 2 µm. L'effet du décalage latéral du sommet de polissage bombé introduit une inclinaison du faisceau émis par la fiche optique lorsque la face optique est dans l'air. Cela accentue l'incertitude grevant le résultat de la méthode de mesure de concentricité normalisée.

Les documents US 6,710,864 B1 et US 6,421,118 B1 divulguent d'autres méthodes de mesure de la concentricité d'un coeur de fibre optique, dans lequelles l'extrémité de la fibre est éclairée sous incidence rasante de manière à ce que le coeur et la gaine de la fibre puissent être observées au microscope.

L'invention propose un dispositif et un procédé de mesure de la concentricité d'un coeur d'une face de fibre optique par rapport à un axe de référence qui remédie aux problèmes précédents, et notamment qui s'affranchit de l'effet de l'angle de la face optique à l'endroit du coeur.

Selon un mode de réalisation, le dispositif de mesure de la concentricité d'un coeur de fibre optique par rapport à un axe de référence, comprend un moyen de détermination de la position de l'intersection de l'axe de référence avec une face optique en extrémité de la fibre optique, un moyen d'injection de lumière dans le coeur de la fibre optique, un objectif et un moyen d'observation, dans un plan conjugué de la face optique, de la lumière émise par le coeur de la fibre optique. L'objectif présente une ouverture numérique inférieure à l'ouverture numérique de la fibre à mesurer.

Dans un tel dispositif, l'objectif ne transmet que la partie du faisceau lumineux émis par la fibre qui est comprise dans le cône d'acceptation définit par l'ouverture numérique de l'objectif. Cela revient à filtrer les modes de propagation périphériques, et à laisser passer les modes de propagation centraux. La tâche lumineuse reçue par le moyen d'observation est centrée sur l'axe optique passant par le centre du coeur de la fibre mesurée et le centre optique de l'objectif. Cela permet de s'affranchir de la dissymétrie éventuelle du faisceau émis par le coeur optique et donc de l'angle éventuel de la face optique à l'endroit du coeur.

Avantageusement, l'ouverture numérique de l'objectif est inférieure à 0,11, ou de préférence inférieure à 0,08, ou en particulier inférieure à 0,06. Par ailleurs, et de manière indépendante, l'ouverture numérique de l'objectif est avantageusement supérieure à 0,01, ou de préférence supérieure à 0,02, ou en particulier supérieure à 0,03.

Avantageusement, le moyen d'observation est une caméra numérique sensible à la lumière du moyen d'injection.

Selon un autre mode de réalisation, le dispositif destiné à la mesure de concentricité du coeur de la fibre d'une fiche optique dont l'axe de référence est défini par un diamètre extérieur d'une férule de la fiche optique, comprend un moyen de rotation de la face optique par rapport au diamètre extérieur de la férule, un moyen de calcul de la position du centre du coeur optique pour chacune des positions de la face optique, et un moyen de calcul du diamètre du cercle passant par lesdites positions du centre du coeur optique.

Avantageusement, l'axe optique de l'objectif étant sensiblement aligné avec l'axe de référence, l'ouverture numérique de l'objectif est obtenue par un diaphragme positionné dans le plan focal image de l'objectif.

Selon un autre mode de réalisation, l'ouverture numérique de l'objectif est obtenue par une pupille positionnée dans le plan frontal d'entrée de l'objectif.

Selon un mode de réalisation, le procédé de mesure de la concentricité d'un coeur d'une fibre optique par rapport à un axe de référence, comprend une étape où on injecte de la lumière dans le coeur de la fibre optique, on observe la lumière émise par le coeur au moyen de l'objectif, on détermine la position de l'intersection de l'axe de référence avec la face optique, et on filtre les modes de propagation périphériques par rapport à l'axe central de l'objectif en utilisant un objectif dont l'ouverture numérique est inférieure à l'ouverture numérique de la fibre optique.

Selon un autre mode de réalisation de l'invention, le procédé dans lequel la détermination de la position de l'intersection de l'axe de référence avec la face optique comprend une première étape où l'on positionne l'axe de référence de la fibre à mesurer) par rapport à l'objectif, on mesure dans un plan image de l'objectif une première position du centre de la tâche de lumière émise par la fibre, puis dans une deuxième et une troisième étape, on fait pivoter la fibre dans deux autres positions angulaires autour de l'axe de référence et on mesure une deuxième et une troisième position du centre de la tâche de lumière émise, et on calcule le centre du cercle passant par lesdites trois positions.

Selon un autre mode de réalisation de l'invention, le procédé, destiné à une fiche optique dont l'axe de référence est défini par un diamètre de référence par rapport auquel est fixé une face optique, comprend une étape préalable où la détermination de la position de l'intersection de l'axe de référence avec la face optique est faite au moyen d'une première fibre, on mémorise ladite position, puis on repositionne le diamètre de référence de la fibre optique à mesurer, de manière que l'axe de référence de la fibre à mesurer soit en position identique à l'axe de référence de la première fibre.

Selon encore un autre mode de réalisation de l'invention, le procédé, destiné à une fiche optique dont l'axe de référence est défini par un diamètre par rapport auquel est fixé une face optique, comprend une étape où on détermine la position de l'intersection de l'axe de référence avec la face optique en illuminant le diamètre et en calculant la position du centre dudit diamètre.

D'autres caractéristiques et avantages de l'invention apparaîtront à la lecture de la description détaillée d'un mode de réalisation pris à titre d'exemple non limitatif et illustré par les dessins annexés, sur lesquels :
- la figure 1 est une illustration de l'image obtenue par un objectif d'un objet émettant une lumière diffusée;
- la figure 2 est une illustration de l'effet d'un décalage longitudinal de l'objet sur l'image obtenue en figure 1 ;
- la figure 3 est une illustration de l'image obtenue par un objectif d'un coeur de fibre optique ;
- la figure 4 est une illustration de l'effet d'un décalage longitudinal d'une face optique polie oblique sur l'image obtenue en figure 3 ;
- la figure 5 est une illustration de l'étape de filtrage selon l'invention ; et
- la figure 6 est une illustration d'un mode de réalisation du procédé et du dispositif de mesure selon l'invention, et notamment d'un mode de réalisation de l'étape de détermination de la position de l'intersection de l'axe de référence avec la face optique.

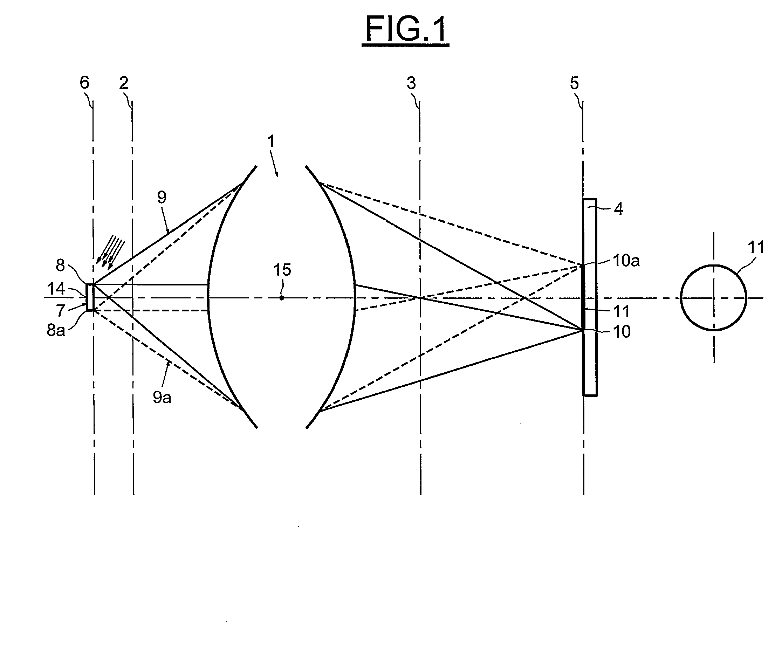

Comme illustrée sur la figure 1, une lentille 1 présente un plan focal objet 2 et un plan focal image 3. Une caméra vidéo possède un capteur matriciel 4 situé dans un plan 5 parallèle aux plans focaux 2, 3 et situé à l'arrière du plan focal image 3. Un plan 6 est le plan conjugué du plan 5 dans l'espace objet. Lorsqu'un objet inerte 7 est positionné sur le plan 6 et éclairé par une source lumineuse extérieure, chaque point de l'objet 7 diffuse une lumière dans toutes les directions. Un point haut 8 de l'objet 7 émet un faisceau 9 de rayon lumineux, indiqué en traits pleins, qui traverse l'objectif et converge vers un point 10. De même, un point bas 8a de l'objet 7 émet un faisceau lumineux 9a, indiqué en pointillés, qui converge en un point 10a. L'objet 7 étant situé sur le plan 6, les points image 10 et 10a sont situés sur le plan 5. Le capteur matriciel 4 reçoit une image 11 de l'objet 7. Cette image est nette et a un diamètre correspondant à l'objet 7 multiplié par le grandissement G de la lentille 1.

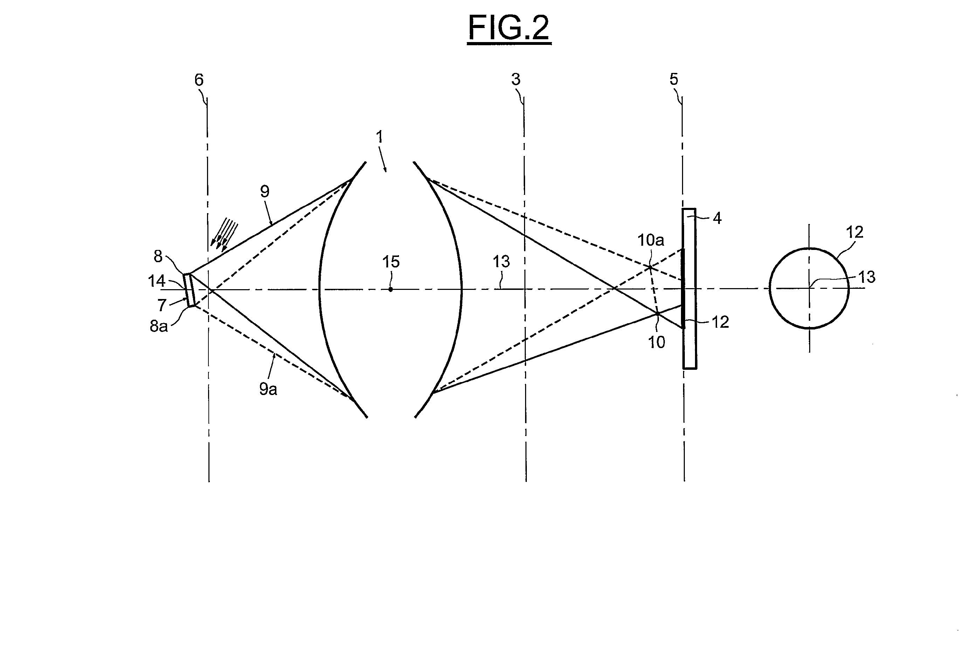

Si on recule et on incline l'objet 7 en arrière du plan 6 comme illustré sur la figure 2, les points d'extrémité 8 et 8a de l'objet 7 émettent des faisceaux qui convergent en des points 10 et 10a positionnés en avant du plan 5. L'image 12 reçue par le capteur matriciel 4 est floue et présente un diamètre supérieur à celui de l'image nette 11. Quels que soient l'inclinaison et le décalage longitudinal de l'objet 7, l'image 12 reste centrée sur un axe optique 13 reliant un centre 14 de l'objet 7 et un centre optique 15 de la lentille 1.

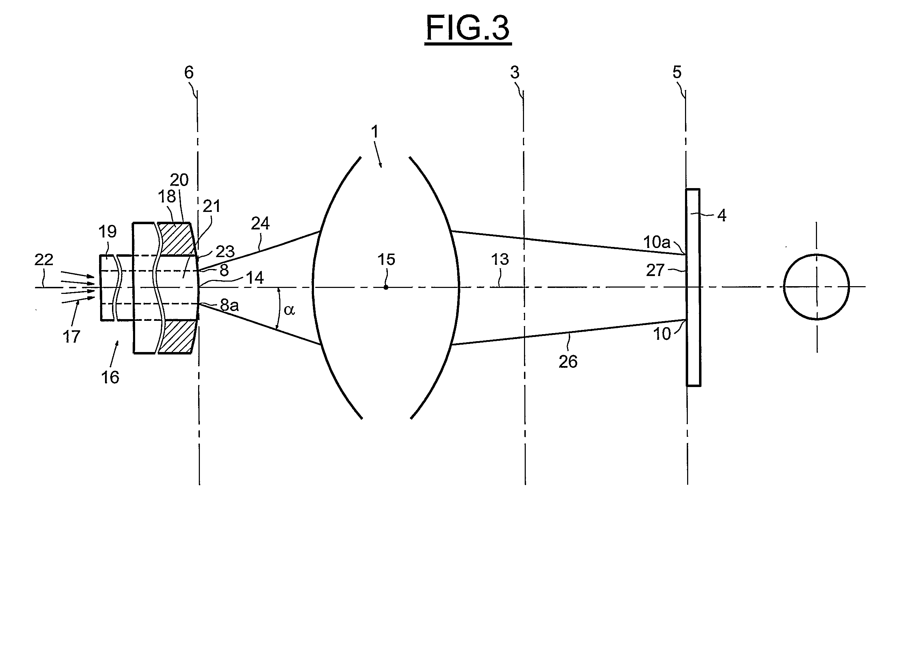

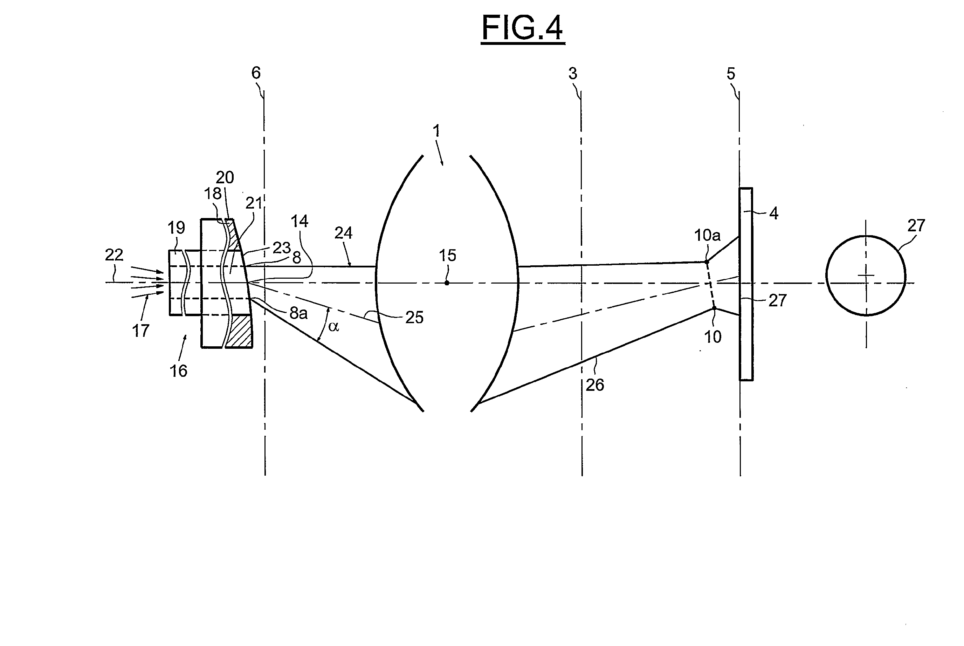

On va, à l'aide des figures 3 et 4, décrire les configurations similaires aux figures 1 et 2, où l'objet 7 est remplacé par une fiche optique 16 dans laquelle on a injecté de la lumière par un moyen 17 non représenté. La fiche optique 16 comprend une férule 18, généralement en zircone ou en métal, une fibre optique 19, généralement en silice fixée dans un alésage de la férule 18. La férule 18 présente un diamètre extérieur 20, généralement de 1,25 mm ou de 2,5 mm pour les applications de télécommunications. Ce diamètre est très précis et présente une tolérance de cylindricité, généralement inférieure à 1 µm, de sorte que ce diamètre 20 sert de référence à la fiche optique 16. La fibre optique 19 présente un coeur optique 21, d'indice optique plus élevé que l'indice de la périphérie de la fibre, de manière à guider l'énergie lumineuse. L'énergie injectée à l'une des extrémités de la fibre optique 19 par le moyen 17, sort à l'autre extrémité de la fibre optique 19 par une face optique 23. L'axe du coeur optique 21 de la fibre 19 est quasiment parallèle à l'axe de référence 22 du diamètre extérieur 20. Lorsque la face optique 23 est dans l'air, l'énergie lumineuse continue sa propagation par un faisceau émis 24 selon un cône de propagation. L'ouverture numérique (sin α) de la fibre optique 19 est par définition le sinus du demi angle α du cône de propagation et dépend des caractéristiques optogéométriques de la fibre.

Contrairement aux faisceaux 9 et 9a émis par l'objet inerte 7, le faisceau émis par le coeur optique 21 a une direction privilégiée qui dépend de l'angle que fait la face optique 23 par rapport à l'axe de référence 22 de la fiche optique 16. Lorsque la face optique 23 est sensiblement perpendiculaire à l'axe de référence 22, le faisceau 24 est émis dans le prolongement de l'axe de référence 22, comme illustré en figure 3. Lorsque la face optique est polie oblique par rapport à l'axe de référence 22, le faisceau émis 24 a une forme conique autour d'un rayon central 25 incliné par rapport à l'axe de référence 22, comme illustré en figure 4.

L'énergie lumineuse traverse la lentille 1 et se concentre selon un faisceau transmis 26. Si l'objet 7 présente les mêmes dimensions et positions que le coeur 21 de la face optique 23, alors le faisceau transmis 26 converge vers les points 10 et 10a décrits dans les figures 1 et 2. Dans la figure 3, la face optique 23 est perpendiculaire à l'axe de référence 22, le capteur matriciel 4 reçoit une tache lumineuse 27 dans l'alignement de l'axe optique 13 passant par le centre 14 du coeur optique 21 et le centre optique 15 de la lentille 1. Dans la figure 4, la face optique 23 présente un angle, la tache lumineuse 27, perçue par le capteur matriciel 4, est décalée latéralement de l'axe optique 13. La valeur de ce décalage latéral dépend de l'angle de polissage, du décalage longitudinal de la face optique 23 par rapport au plan 6, et des caractéristiques optiques de la fibre 19. Dans le cas d'une fibre monomode en silice polie oblique, l'inclinaison du rayon central 25 est de 3,8° par rapport à l'axe de référence 22. L'angle α d'ouverture du cône du faisceau émis 24 est de ± 6° autour du rayon central 25. La concentricité que l'on cherche à mesurer est un diamètre de l'ordre de 2 µm. Le décalage longitudinal de la face optique 23 provoquant un déport latéral de la tache lumineuse 27 d'environ 2 µm, n'est que de ± 15 µm. La méthode normalisée, nécessitant une rotation physique de la fiche optique 16, on comprend qu'elle ne couvre pas les fiches optiques polies obliques.

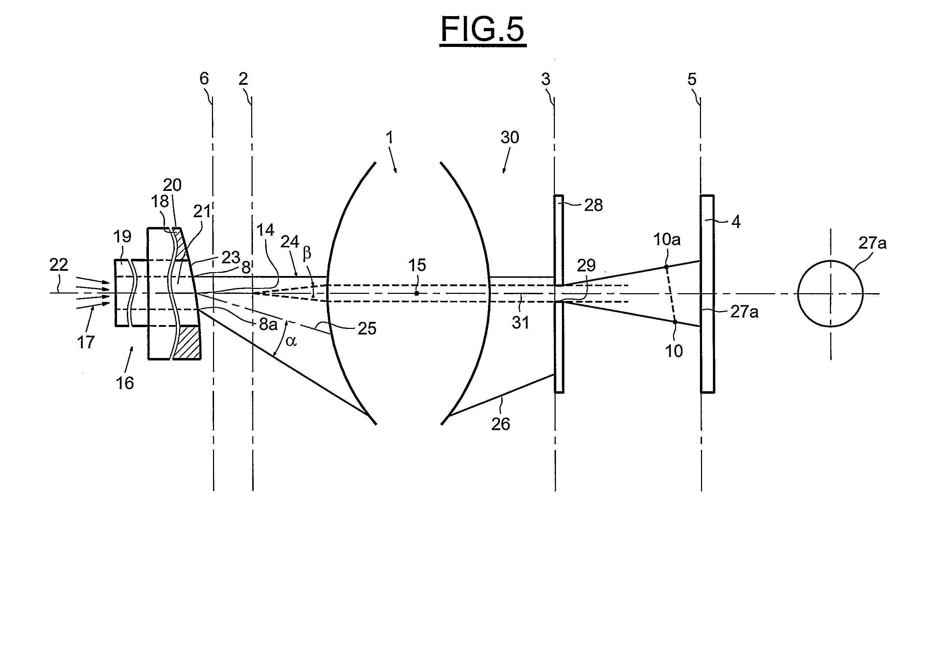

Telle qu'illustrée dans la figure 5, la lentille 1 est équipée d'un diaphragme 28 positionné dans le plan focal image 3 de la lentille 1. Le diaphragme 28 et la lentille 1 forment un objectif 30 d'axe 31. L'ouverture numérique (sin β) de l'objectif 30 est par définition le sinus du demi-angle β d'ouverture du cône de lumière qui émergerait d'un point du plan focal objet 2 pour être transformé par la lentille 1 en un faisceau parallèle délimité par le diaphragme 28. L'ouverture numérique indique l'inclinaison maximale des faisceaux que l'objectif 30 est susceptible de prendre en compte. Cette ouverture numérique est la conséquence directe d'un diamètre d'ouverture 29 du diaphragme 28 et des caractéristiques optogéométriques de la lentille 1. L'axe 31 de l'objectif 30 et le capteur matriciel 4 sont sensiblement alignés avec l'axe de référence 22 de la fiche optique 16. Le faisceau émis 24 est dissymétrique, de sorte que seule une petite partie latérale de ce faisceau est transmise et constitue une tache lumineuse 27a reçue par le capteur matriciel 4.

Dans le cas d'une fibre monomode, on utilise, par exemple, un système optique de grandissement 10 et d'ouverture numérique 0,25. Quand on combine ce système optique avec le diaphragme 28 d'un diamètre d'ouverture 29 de 400 µm situé dans le plan focal image 3, on obtient un objectif 30 ayant une ouverture numérique de l'ordre de 0,05. On peut décrire de manière imagée l'effet du diaphragme 28 en faisant remarquer que la présence du diaphragme 28 ne change pas les points de focalisation des faisceaux, de sorte que le faisceau transmis 26 vise les points 10 et 10a de la figure 4. On comprend alors que la tache lumineuse 27a soit centrée sur l'axe optique 31, c'est-à-dire que l'on a supprimé l'effet du décalage latéral de la tache 27 visible sur la figure 4, décalage qui est dû à la dissymétrie du faisceau 24.

Le diamètre du coeur de fibre 21 étant d'un ordre de grandeur proche de la longueur d'onde de la lumière, il est préférable de décrire l'effet du diaphragme 28 en termes de propagation d'énergie. Si l'on disposait d'un écran fictif sur le plan focal image 3, on obtiendrait une image ayant pour forme la transformée de Fourier optique de la forme du coeur 21 de la fibre. Le coeur 21 étant de forme circulaire, la transformée de Fourier de cette forme est une série d'anneaux concentriques. L'effet du diaphragme 28 est un filtrage spatial des modes de propagation, laissant passer les modes d'ordre inférieur correspondant à l'axe central 31 de l'objectif 30, et bloquant les modes périphériques d'ordre supérieur. La tache lumineuse 27a ne bénéficie plus de la superposition des modes d'ordre supérieur périphériques. Ces modes d'ordre supérieur périphériques contribuent à la netteté de l'image 27, mais sont aussi responsables de son décalage latéral. Le diaphragme 28, ainsi positionné, est un filtre passe-bas qui permet d'obtenir une tache lumineuse 27a moins nette que la tache 27 obtenue dans les configurations décrites en figure 3 ou 4, mais cette tache 27a est centrée sur l'axe optique 31 malgré le décalage longitudinal de la face optique 23 par rapport au plan 6 et malgré la déviation angulaire du faisceau central 25 du faisceau émis 24.

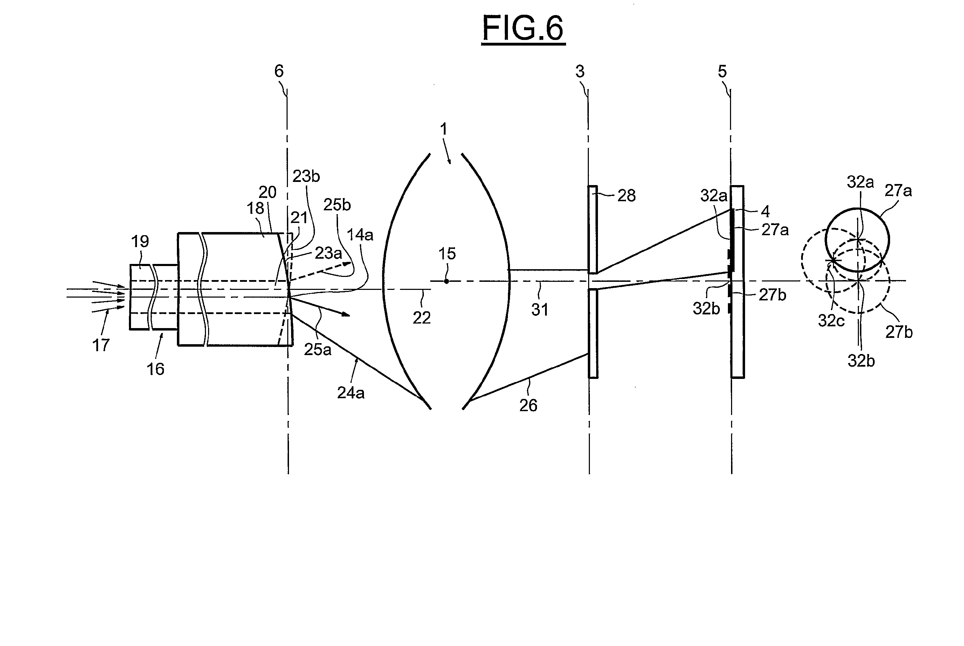

On va maintenant décrire à l'aide de la figure 6 un mode de réalisation de l'étape de détermination de la position de l'intersection de l'axe de référence 22 avec la face optique 23. Grâce à l'étape de filtrage décrite en figure 5, le dispositif permet de mesurer la concentricité du coeur de la fibre 21 par rapport à l'axe de référence 22.

Dans la figure 6, on a accentué le défaut de concentricité du coeur 21 de la fibre optique 19 par rapport à l'axe de référence 22. L'alignement de l'axe 31 de l'objectif 30 et de l'axe de référence 22 de la fiche optique 16, permet de filtrer correctement les modes périphériques. Cependant, les deux axes 22 et 31 peuvent être décalés de plusieurs micromètres comme illustré en figure 6, sans affecter la précision de la mesure. Dans une première position de la fiche optique 16, illustrée en traits pleins, la lumière introduite par le moyen d'injection 17 sort d'une face optique 23a dans la direction d'un rayon central 25a. L'objectif 30 filtre les modes périphériques du faisceau émis 24a et une tache lumineuse 27a est reçue par le capteur matriciel 4. Un calculateur permet de déterminer la position du centre 32a de la tache lumineuse 27a. Le centre 14a du coeur 21, le centre optique 15 de l'objectif 30 et le centre 32a de la tache lumineuse 27a, sont alignés.

On fait ensuite pivoter la fiche optique 16 autour de l'axe de référence 22. Le moyen de pivotement de la fiche 16 autour de l'axe de référence 22 peut être réalisé par un dispositif plaquant le diamètre extérieur 20 sur un Vé ou sur un mécanisme de centrage, tel qu'une bague élastique. Le Vé ou la bague élastique sont fixés par rapport à l'objectif 30.

La deuxième position de la fiche optique 16 correspond à un pivotement d'un angle quelconque, par exemple de 180°, ainsi qu'illustré en pointillés sur la figure 6. La lumière introduite par le moyen d'injection 17 sort d'une face optique 23b dans la direction d'un rayon central 25b et rejoint le capteur matriciel 4 sous forme d'une tache lumineuse 27b. Le calculateur détermine la position du centre 32b de la tache lumineuse 27b. Le centre 32b, le centre optique 15 de l'objectif 30 et le centre du coeur 21 dans cette deuxième position de la fiche 16, sont alignés.

La fiche 16 est encore pivotée autour de l'axe de référence 22. Cela permet de déterminer un centre 32c de la tache lumineuse correspondant au centre 14 du coeur 21 de la fiche 16 dans cette troisième position. Un calculateur détermine le diamètre du cercle passant par les trois points 32a, 32b, 32c. En divisant ce diamètre par le grandissement G de l'objectif 30, on obtient la concentricité du coeur 21 par rapport à l'axe de référence 22. Le centre de ce cercle est l'image du point d'intersection de l'axe de référence 22 avec la face optique. Le moyen de pivotement de la fiche 16, par rapport à l'axe de référence 22 de la férule 18, associé au calculateur, constitue un moyen de détermination de la position de l'intersection de l'axe de référence 22 avec la face optique 23.

Le dispositif et le procédé de l'invention permettent de s'affranchir de l'angle de la face optique 23 à l'endroit du coeur et/ou d'un décalage longitudinal de la face optique 23 par rapport au plan 6 conjugué du plan 5 où est observée la tache lumineuse 27.

Le filtrage des modes périphériques par l'objectif 30 commence dès que l'ouverture numérique de l'objectif 30 est inférieure à l'ouverture numérique de la fibre optique 19.

Les mesures de concentricité étant surtout nécessaires pour des fibres monomodes en silice pour les applications de télécommunications, dont le diamètre de coeur est de 10µm et d'ouverture numérique 0,11, un dispositif équipé d'un objectif 30 d'ouverture numérique inférieure à 0,11 permet de mettre en oeuvre le procédé de l'invention pour les fibres optiques monomodes.

De manière préférentielle, le dispositif est équipé d'un objectif 30 d'ouverture numérique inférieure à 0,08. Cela permet de supprimer la contribution du décalage latéral du sommet du polissage bombé non oblique de fiches optiques pourvues d'une fibre monomode, à l'incertitude de mesure de concentricité.

De manière encore plus préférentielle, le dispositif est équipé d'un objectif 30 d'ouverture numérique inférieure à 0,06. Cela permet de mesurer des fiches polies oblique et pourvues d'une fibre monomode.

Si pour des fibres optiques de 10 µm de diamètre de coeur, un objectif d'ouverture numérique 0.05 donne un certain niveau de filtrage, pour des fibres de diamètre de coeur de 3 à 5 µm le même niveau de filtrage pourrait être atteint par un objectif qui aurait une ouverture numérique voisine de 0,1, et ainsi permettre de mesurer des fiches optiques polies obliques.

Pour les fibres optiques présentant une ouverture numérique supérieure à 0,11, par exemple pour les fibres en matériau autre que la silice, l'invention peut être mise en oeuvre par un dispositif dont l'objectif a une ouverture numérique, supérieure à 0,11, mais inférieure à l'ouverture numérique de la fibre à mesurer.

Par ailleurs, plus l'ouverture numérique de l'objectif 30 est faible moins l'objectif 30 transmet d'énergie au capteur matriciel 4 de la caméra. De manière préférentielle, le dispositif est équipé d'un objectif 30 d'ouverture numérique supérieure à 0,01 pour éviter d'avoir recours à des sources d'injection de lumière 17 trop puissante risquant de dégrader la fiche optique à mesurer.

De manière encore plus préférentielle, l'ouverture numérique de l'objectif est supérieure à 0,02, et utilise un moyen d'injection de lumière 17 et un capteur matriciel facilement disponibles. Avantageusement, le dispositif est équipé d'un objectif d'ouverture numérique supérieure à 0,03. Cela permet d'obtenir une tâche lumineuse 27 transmise par l'objectif 30 dont les contours sont suffisamment marqués pour que le centre 32a, 32b 32c de la tâche lumineuse 27 soit suffisamment détectable.

La norme IEC 61300-3-25 a été publiée en mars 1997. Les fiches optiques polies en oblique existaient bien avant la préparation de cette norme. Le fait de réduire l'ouverture numérique de l'objectif va à l'encontre des préjugés des opticiens. En effet, la distance à mesurer entre les différentes positions du centre 14 du coeur 31 de la fibre optique 19 au cours du pivotement, est de l'ordre du micromètre, donc proche de la longueur d'onde. La tendance naturelle de l'opticien est d'augmenter au maximum l'ouverture numérique, de manière à augmenter le pouvoir séparateur de l'objectif 30. Le fait de réduire l'ouverture numérique de l'objectif 30, dégrade la netteté de l'image 27a du coeur 31. C'est un effet particulièrement surprenant que le fait de filtrer les modes périphériques d'ordre supérieur de l'objectif 30, permette de s'affranchir de l'angle de la face optique 23.

On va maintenant décrire d'autre modes de réalisation du procédé de mesure. Dans un deuxième mode de réalisation, la détermination de l'intersection de l'axe de référence 22 avec la face optique 23 peut se faire, non par pivotement comme dans le premier procédé décrit, mais par deux mesures directes. Dans une première mesure, on éclaire à l'aide d'une source la totalité du diamètre extérieur 20. La lentille 1, de préférence sans diaphragme, fournit une image nette du diamètre 20 sur le capteur matriciel 4. Dans une deuxième mesure, on injecte de la lumière dans le coeur 21 de la fibre 19. L'objectif 30, équipé du diaphragme 28, fournit une tache lumineuse 27 sur le capteur matriciel 4.

Dans un troisième mode de réalisation, la détermination de la position de l'intersection de l'axe de référence 22 avec la face optique 23 peut être réalisée, non pas par pivotement de chaque fiche 16 à mesurer, mais par un procédé d'étalonnage. On détermine au préalable la position de l'intersection de l'axe de référence 22 avec la face optique 23 d'une première fiche selon par exemple le premier ou le deuxième procédé décrit. On mémorise ladite position. Le dispositif permettant ce troisième procédé comprend un moyen de centrage du diamètre de référence 20 qui est fixe par rapport à l'objectif 30. Le moyen de centrage permet de recevoir plusieurs fiches 16 à mesurer et garantit la reproductibilité du positionnement de l'axe de référence 22. Le calculateur mesure la distance entre le point 32 et un point mémorisé lors de l'étalonnage. Dans ce mode de réalisation, chaque fiche 16 est mesurée une seule fois.

Selon une variante, on peut disposer le diaphragme 28 à un autre endroit. On peut, par exemple, mettre une pupille sur la frontale d'entrée de l'objectif 30.

Le dispositif et le procédé de l'invention ne sont pas limités à la mesure de concentricité. Ils peuvent être utilisés pour la mesure de fibres optiques présentant une direction radiale privilégiée, telles que des fibres à maintien de polarisation ou des fibres à trous par exemple. Le dispositif de l'invention, associé à un moyen de détermination de ladite direction radiale, permet de mesurer la position de l'axe du coeur 21 de la fibre optique 19 par rapport à un trièdre de référence, défini par l'axe de référence 22, ladite direction radiale et le sens de propagation de la lumière dans la fibre optique.

Le moyen d'observation de la tache lumineuse 27 n'est pas limité à un capteur matriciel 4. Un système d'oculaire, dont un plan focal objet est positionné sur le plan image 5, peut être équipé d'un réticule pour déterminer la position de la tache lumineuse 27.

## Revendications

1. Dispositif de mesure de la concentricité d'un coeur (21) de fibre optique (19) par rapport à un axe de référence (22), comprenant un moyen de détermination de la position de l'intersection de l'axe de référence (22) avec une face optique (23) en extrémité de la fibre optique (19), un moyen d'injection (17) de lumière dans le coeur (21) de la fibre optique (19), un objectif (30) et un moyen d'observation (4), dans un plan (5) conjugué de la face optique (23), de la lumière émise par le coeur (21) de la fibre optique (19), **caractérisé par le fait que** l'objectif (30) présente une ouverture numérique (sin β) inférieure à l'ouverture numérique (sin α) de la fibre optique à mesurer.

2. Dispositif selon la revendication 1, dans lequel l'ouverture numérique (sin β) de l'objectif (30) est inférieure à 0,11, ou de préférence inférieure à 0,08, ou en particulier inférieure à 0,06.

3. Dispositif selon la revendication 1 ou 2, dans lequel l'ouverture numérique (sin β) de l'objectif (30) est supérieure à 0,01, ou de préférence supérieure à 0,02, ou en particulier supérieure à 0,03.

4. Dispositif selon l'une quelconque des revendications 1 à 3, dans lequel le moyen d'observation est une caméra numérique sensible à la lumière du moyen d'injection (17).

5. Dispositif selon l'une quelconque des revendications 1 à 4, destiné à la mesure de concentricité du coeur de la fibre d'une fiche optique dont l'axe de référence (22) est défini par un diamètre extérieur (20) d'une férule (18) de la fiche optique, le dispositif comprenant un moyen de pivotement de la face optique (23) par rapport au diamètre extérieur (20) de la férule (18), un moyen de calcul de la position (14) du centre du coeur optique (21) pour chacune des positions de la face optique (23), et un moyen de calcul du diamètre du cercle passant par lesdites positions du centre du coeur optique (21).

6. Dispositif selon l'une quelconque des revendications 1 à 5, dans lequel l'axe optique (31) de l'objectif (30) est sensiblement aligné avec l'axe de référence (22), l'ouverture numérique (sin P) de l'objectif (30) est obtenue par un diaphragme (28) positionné dans le plan focal image (3) de l'objectif (30).

7. Dispositif selon l'une quelconque des revendications 1 à 5, dans lequel l'ouverture numérique (sin β) de l'objectif (30) est obtenue par une pupille positionnée sur le plan frontal d'entrée de l'objectif (30).

8. Procédé de mesure de la concentricité d'un coeur (21) d'une fibre optique (19) par rapport à un axe de référence (22), la fibre optique (19) présentant à une extrémité une face optique (23), procédé dans lequel on injecte de la lumière dans le coeur (21) de la fibre optique (19), on observe la lumière émise par le coeur (21) au moyen d'un objectif (30), on détermine la position de l'intersection de l'axe de référence (22) avec la face optique (23), **caractérisé par le fait qu'**on filtre les modes de propagation périphériques par rapport à l'axe central (31) de l'objectif (30) en utilisant un objectif (30) dont l'ouverture numérique (sin β) est inférieure à l'ouverture numérique (sin α) de la fibre optique (19) à mesurer.

9. Procédé selon la revendication 8, dans lequel la détermination de la position de l'intersection de l'axe de référence (22) avec la face optique (23) comprend une première étape où l'on positionne l'axe de référence (22) de la fibre à mesurer (19) par rapport à l'objectif (30), on mesure dans un plan image (5) de l'objectif (30) une première position (32a) du centre de la tâche de lumière (27a) émise par la fibre (19), puis dans une deuxième et une troisième étape, on fait pivoter la fibre (19) dans deux autres positions angulaires autour de l'axe de référence (22) et on mesure une deuxième (32b) et une troisième (32c) position du centre de la tâche de lumière émise, et on calcule le centre du cercle passant par lesdites trois positions (32a, 32b, 32c).

10. Procédé selon l'une des revendications 8 et 9, comprenant une étape préalable dans laquelle la détermination de la position de l'intersection de l'axe de référence (22) avec la face optique (23) est faite au moyen d'une première fibre optique, on mémorise ladite position, puis on repositionne le diamètre de référence (20) de la fibre optique à mesurer, de manière que l'axe de référence (22) de la fibre à mesurer soit en position identique à l'axe de référence (22) de la première fibre.

11. Procédé selon l'une quelconque des revendications 8 à 10, destiné à une fiche optique (16) dont l'axe de référence (22) est défini par un diamètre de référence (20) par rapport auquel est fixée une face optique (23), procédé dans lequel on détermine la position de l'intersection de l'axe de référence (22) avec la face optique (23) en illuminant le diamètre (20) et en calculant la position du centre dudit diamètre (20).

## Patentansprüche

1. Vorrichtung zum Messen der Konzentrizität eines Kerns (21) einer optischen Faser (19) bezüglich einer Bezugsachse (22), die eine Einrichtung zur Bestimmung der Stellung des Schnittpunkts der Bezugsachse (22) mit einer optischen Fläche (23) am Ende der optischen Faser (19), eine Einrichtung (17) zum Injizieren von Licht in den Kern (21) der optischen Faser (19), ein Objektiv (30) und eine Beobachtungseinrichtung (4), in einer konjugierten Ebene (5) der optischen Fläche (23), des vom Kern (21) der optischen Faser (19) emittierten Lichts enthält, **dadurch gekennzeichnet, dass** das Objektiv (30) eine numerische Apertur (sin β) kleiner als die numerische Apertur (sin α) der zu messenden optischen Faser aufweist.

2. Vorrichtung nach Anspruch 1, wobei die numerische Apertur (sin β) des Objektivs (30) kleiner als 0,11, oder vorzugsweise kleiner als 0,08, oder insbesondere kleiner als 0,06 ist.

3. Vorrichtung nach Anspruch 1 oder 2, wobei die numerische Apertur (sin β) des Objektivs (30) größer als 0,01, oder vorzugsweise größer als 0,02, oder insbesondere größer als 0,03 ist.

4. Vorrichtung nach einem der Ansprüche 1 bis 3, wobei die Beobachtungseinrichtung eine für das Licht der Injektionseinrichtung (17) empfindliche Digitalkamera ist.

5. Vorrichtung nach einem der Ansprüche 1 bis 4, die für die Konzentrizitätsmessung des Kerns der Faser eines optischen Steckers bestimmt ist, dessen Bezugsachse (22) durch einen Außendurchmesser (20) einer Hülse (18) des optischen Steckers definiert wird, wobei die Vorrichtung eine Schwenkeinrichtung der optischen Fläche (23) bezüglich des Außendurchmessers (20) der Hülse (18), eine Einrichtung zur Berechnung der Stellung (14) der Mitte des optischen Kerns (21) für jede der Stellungen der optischen Fläche (23), und eine Einrichtung zur Berechnung des Durchmessers des Kreises enthält, der durch die Stellungen der Mitte des optischen Kerns (21) geht.

6. Vorrichtung nach einem der Ansprüche 1 bis 5, wobei die optische Achse (31) des Objektivs (30) im Wesentlichen mit der Bezugsachse (22) ausgerichtet ist, die numerische Apertur (sin β) des Objektivs (30) durch eine Membran (28) erhalten wird, die in der Bildbrennebene (3) des Objektivs (30) positioniert ist.

7. Vorrichtung nach einem der Ansprüche 1 bis 5, wobei die numerische Apertur (sin β) des Objektivs (30) durch eine Pupille erhalten wird, die auf der Eingangs-Frontalebene des Objektivs (30) positioniert ist.

8. Verfahren zur Messung der Konzentrizität eines Kerns (21) einer optischen Faser (19) bezüglich einer Bezugsachse (22), wobei die optische Faser (19) an ihrem Ende eine optische Fläche (23) aufweist, Verfahren, bei dem Licht in den Kern (21) der optischen Faser (19) injiziert wird, das vom Kern (21) emittierte Licht mittels eines Objektivs (30) beobachtet wird, die Stellung des Schnittpunkts der Bezugsachse (22) mit der optischen Fläche (23) bestimmt wird, **dadurch gekennzeichnet, dass** die peripheren Ausbreitungsarten bezüglich der Mittelachse (31) des Objektivs (30) gefiltert werden, indem ein Objektiv (30) verwendet wird, dessen numerische Apertur (sin β) kleiner als die numerische Apertur (sin α) der zu messenden optischen Faser (19) ist.

9. Verfahren nach Anspruch 8, wobei die Bestimmung der Stellung des Schnittpunkts der Bezugsachse (22) mit der optischen Fläche (23) einen ersten Schritt enthält, in dem die Bezugsachse (22) der zu messenden Faser (19) bezüglich des Objektivs (30) positioniert wird, in einer Bildebene (5) des Objektivs (30) eine erste Stellung (32a) der Mitte des von der Faser (19) emittierten Lichtflecks (27a) gemessen wird, dann in einem zweiten und dritten Schritt die Faser (19) in zwei andere Winkelstellungen um die Bezugsachse (22) geschwenkt wird, und eine zweite (32b) und eine dritte (32c) Stellung der Mitte des emittierten Lichtflecks gemessen wird, und die Mitte des durch die drei Stellungen (32a, 32b, 32c) gehenden Kreises berechnet wird.

10. Verfahren nach einem der Ansprüche 8 und 9, das einen vorhergehenden Schritt enthält, in dem die Bestimmung der Stellung der Schnittpunkt der Bezugsachse (22) mit der optischen Fläche (23) mittels einer ersten optischen Faser erfolgt, die Stellung gespeichert wird, dann der Bezugsdurchmesser (20) der zu messenden optischen Faser neu positioniert wird, damit die Bezugsachse (22) der zu messenden Faser sich in der gleichen Stellung zur Bezugsachse (22) der ersten Faser befindet.

11. Verfahren nach einem der Ansprüche 8 bis 10, das für einen optischen Stecker (16) bestimmt ist, dessen Bezugsachse (22) durch einen Bezugsdurchmesser (20) definiert wird, bezüglich dessen eine optische Fläche (23) fixiert ist, Verfahren, bei dem die Stellung des Schnittpunkts der Bezugsachse (22) mit der optischen Fläche (23) bestimmt wird, indem der Durchmesser (20) beleuchtet wird und indem die Stellung der Mitte des Durchmessers (20) berechnet wird.

## Claims

1. Device for measuring the concentricity of the core (21) of an optical fiber (19) relative to a reference axis (22), comprising a means for determining the position of the intersection of the reference axis (22) with an optical face (23) on the end of the optical fiber (19), a means (17) for injecting light into the core (21) of the optical fiber (19), an objective (30) and a means (4) for observing, in a plane (5) conjugate with the optical face (23), the light emitted by the core (21) of the optical fiber (19), **characterized in that** the objective (30) has a numerical aperture (sinβ) smaller than the numerical aperture (sinα) of the optical fiber to be measured.

2. Device according to Claim 1, in which the numerical aperture (sinβ) of the objective (30) is less than 0.11, or preferably less than 0.08 or in particular less than 0.06.

3. Device according to Claim 1 or 2, in which the numerical aperture (sinβ) of the objective (30) is greater than 0.01, or preferably greater than 0.02 or in particular greater than 0.03.

4. Device according to any one of Claims 1 to 3, in which the observation means is a digital camera sensitive to the light of the injection means (17).

5. Device according to any one of Claims 1 to 4, intended for measuring the concentricity of the core of the fiber of an optical connector, the reference axis (22) of which is defined by an outside diameter (20) of a ferrule (18) of the optical connector, the device comprising a means for pivoting the optical face (23) relative to the outside diameter (20) of the ferrule (18), a means for calculating the position (14) of the center of the optical core (21) for each of the positions of the optical face (23), and a means for calculating the diameter of the circle passing through said positions of the center of the optical core (21).

6. Device according to any one of Claims 1 to 5, in which the optical axis (31) of the objective (30) is approximately aligned with the reference axis (22) and the numerical aperture (sinβ) of the objective (30) is obtained by a diaphragm (28) positioned in the image focal plane (3) of the objective (30).

7. Device according to any one of Claims 1 to 5, in which the numerical aperture (sinβ) of the objective (30) is obtained by a pupil positioned on the transverse entry plane of the objective (30).

8. Method for measuring the concentricity of the core (21) of an optical fiber (19) relative to a reference axis (22), the optical fiber (19) having an optical face (23) at one end, in which method light is injected into the core (21) of the optical fiber (19), the light emitted by the core (21) is observed by means of an objective (30) and the position of the intersection of the reference axis (22) with the optical face (23) is determined, **characterized in that** the propagation modes that are peripheral to the central axis (31) of the objective (30) are filtered out by using an objective (30) the numerical aperture (sinβ) of which is smaller than the numerical aperture (sinα) of the optical fiber (19) to be measured.

9. Method according to Claim 8, in which the determination of the position of the intersection of the reference axis (22) with the optical face (23) includes a first step in which the reference axis (22) of the fiber (19) to be measured is positioned relative to the objective (30) and a first position (32a) of the center of the light spot (27a) emitted by the fiber (19) is measured in an image plane (5) of the objective (30) and then, in a second and a third step, the fiber (19) is pivoted in two other angular positions about the reference axis (22), a second position (32b) and a third position (32c) of the center of the emitted light spot are measured and the center of the circle passing through said three positions (32a, 32b, 32c) is calculated.

10. Method according to one of Claims 8 and 9, which includes a prior step in which the position of the intersection of the reference axis (22) with the optical face (23) is determined by means of a first optical fiber, said position is stored and then the reference diameter (20) of the optical fiber to be measured is repositioned so that the reference axis (22) of the fiber to be measured is in the identical position to the reference axis (22) of the first fiber.

11. Method according to any one of Claims 8 to 10, intended for an optical connector (16), the reference axis (22) of which is defined by a reference diameter (20) relative to which an optical face (23) is fixed, in which method the position of the intersection of the reference axis (22) with the optical face (23) is determined by illuminating the diameter (20) and by calculating the position of the center of said diameter (20).
